(19) Europäisches Patentamt
European Patent Office
Office européen des brevets

(11) **EP 2 759 565 B1**

(12) **EUROPEAN PATENT SPECIFICATION**

(45) Date of publication and mention
of the grant of the patent:
**07.03.2018 Bulletin 2018/10**

(21) Application number: **12833006.5**

(22) Date of filing: **18.09.2012**

(51) Int Cl.:
*C08J 9/04* (2006.01)  *B32B 5/18* (2006.01)
*B32B 27/00* (2006.01)  *C08K 5/14* (2006.01)
*C08K 5/33* (2006.01)  *C08L 23/16* (2006.01)
*C08L 71/02* (2006.01)  *C09K 3/10* (2006.01)
*G10K 11/16* (2006.01)  *G10K 11/162* (2006.01)
*C08J 9/00* (2006.01)  *C08J 9/10* (2006.01)

(86) International application number:
**PCT/JP2012/073807**

(87) International publication number:
**WO 2013/042650 (28.03.2013 Gazette 2013/13)**

(54) **ETHYLENE-PROPYLENE-DIENE RUBBER FOAM, METHOD FOR PRODUCING SAME, AND SEALING MATERIAL**

ETHYLEN-PROPYLEN-DIENKAUTSCHUKSCHAUMSTOFF, HERSTELLUNGSVERFAHREN DAFÜR UND DICHTUNGSMATERIAL

MOUSSE DE CAOUTCHOUC ÉTHYLÈNE-PROPYLÈNE-DIÈNE AINSI QUE PROCÉDÉ DE FABRICATION DE CELLE-CI, ET MATÉRIAU D'ÉTANCHÉITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.09.2011 JP 2011206296**
**27.08.2012 JP 2012186694**

(43) Date of publication of application:
**30.07.2014 Bulletin 2014/31**

(73) Proprietor: **Nitto Denko Corporation**
**Ibaraki-shi, Osaka 567-8680 (JP)**

(72) Inventors:
• **IWASE, Takayuki**
**Ibaraki-shi**
**Osaka 567-8680 (JP)**
• **KAWATA, Joji**
**Ibaraki-shi**
**Osaka 567-8680 (JP)**

(74) Representative: **Schwabe - Sandmair - Marx**
**Patentanwälte Rechtsanwalt**
**Partnerschaft mbB**
**Joseph-Wild-Straße 20**
**81829 München (DE)**

(56) References cited:
**EP-A1- 1 964 864     EP-A1- 2 354 170**
**EP-A1- 2 392 609     JP-A- H1 077 463**
**JP-A- S55 123 630    JP-A- 2000 159 953**
**JP-A- 2000 159 953   JP-A- 2001 503 092**
**JP-A- 2002 179 825   JP-A- 2002 179 825**
**JP-A- 2003 147 112   JP-A- 2008 208 256**
**JP-A- 2010 144 006   JP-A- 2012 017 452**
**JP-A- 2012 214 757**

Remarks:
The file contains technical information submitted after the application was filed and not included in this specification

## Description

Technical Field

The present invention relates to an ethylene-propylene-diene rubber foamed material, a sealing material including the ethylene-propylene-diene rubber foamed material, and a method for producing an ethylene-propylene-diene rubber foamed material, to be specific, to an ethylene-propylene-diene rubber foamed material preferably used as a sealing material for various industrial products, a sealing material including the ethylene-propylene-diene rubber foamed material, and a method for producing an ethylene-propylene-diene rubber foamed material.

Background Art

As a sealing material for various industrial products, an EPDM foamed material obtained by foaming an ethylene-propylene-diene rubber (hereinafter, may be abbreviated as an EPDM) has been conventionally known.

An EPDM foamed material is generally produced by foaming an EPDM with a foaming agent and cross-linking the EPDM with sulfur. When the EPDM is cross-linked with the sulfur, however, there may be a case where depending on a type of a member to be sealed, the member is corroded by the sulfur that remains in the EPDM foamed material.

Thus, in order to reduce the corrosive properties, for example, an ethylene-propylene-diene rubber foamed material obtained by foaming a rubber composition containing an EPDM, a quinoid-based cross-linking agent, and an organic peroxide-based cross-linking agent and furthermore, a cross-linking auxiliary (a vulcanizing retardant) such as thiazoles and thioureas has been proposed (ref: for example, the following Patent Document 1).

Prior Art Document

EP 1 964 864 A1 discloses an ethylene-propylene-diene rubber foamed material suitably used as sealing material and obtained from a composition comprising EPDM, p,p'-dibenzoylquinonedioxime and dicumyl peroxide. JP 2000 159953 A discloses an ethylene-propylene-diene rubber foamed material suitably used as sealing materials and obtained from a composition comprising EPDM, dicumyl peroxide or 1,1,-bis-(t-butylperoxy)-3,3,5-trimethylcyclohexane as crosslinking agent. JP 2002 179825 A discloses a foam comprising EPDM, dicyclopentadiene, dicumyl peroxide and 1,1,-bis-(t-butylperoxy)-3,3,5-trimethylcyclohexane as crosslinking agent, which has a 50% compression stress of 0.5 N/cm2 or less. EP 2 392 609 A1 discloses a foam obtained from a composition comprising EPDM, quinonedioxime and optionally p,p'-dibenzoyldioxime and dicumyl peroxide. JP 2010 144006 A discloses the use of pressure sensitive adhesive in sealing material comprising a foamed rubber material. EP 2 354 170 discloses a method of manufacturing an EPDM copolymer having long chain branching and a foam prepared therefrom.

Patent Document

Patent Document 1: Japanese Unexamined Patent Publication No. 2008-208256

Summary of the Invention

Problems to be solved by the Invention

In the ethylene-propylene-diene rubber foamed material described in the above-described Patent Document 1, a sulfur atom content thereof is suppressed and the corrosive properties are capable of being reduced.

On the other hand, for example, when the ethylene-propylene-diene rubber foamed material is used as a sealing material, the flexibility is desired to be improved in order to sufficiently ensure the, fittability, the followability to irregularities, and the like with respect to an object to be sealed.

It is an object of the present invention to provide an ethylene-propylene-diene rubber foamed material that is capable of achieving a reduction in the corrosive properties and improving the flexibility, a sealing material including the ethylene-propylene-diene rubber foamed material, and a method for producing an ethylene-propylene-diene rubber foamed material.

Solution to the Problems

In order to achieve the above-described object, an ethylene-propylene-diene rubber foamed material of the present invention is obtained by foaming a rubber composition containing an ethylene-propylene-diene rubber, wherein the ethylene-propylene-diene rubber foamed material has a 50 % compressive load value of 0.1 to 2.0 N/cm$^2$ and the

content ratio of a sulfur atom calculated based on the measurement result of a fluorescent X-ray measurement, based on mass, is 1000 ppm or less, the rubber composition further contains a quinoid compound and an organic peroxide, and the ethylene propylene-diene rubber has long chain branching.

In the ethylene-propylene-diene rubber foamed material of the present invention, it is preferable that the content ratio of sulfur $S_8$ calculated based on the measurement result of a gel permeation chromatography, based on mass, is 10 ppm or less.

In the ethylene-propylene-diene rubber foamed material of the present invention, it is preferable that the ethylene-propylene-diene rubber foamed material has an apparent density of 0.50 g/cm$^3$ or less.

In the ethylene-propylene-diene rubber foamed material of the present invention, it is preferable that the quinoid compound is a derivative of p-quinonedioxime.

In the ethylene-propylene-diene rubber foamed material of the present invention, it is preferable that the rubber composition fails to contain a vulcanizing retardant containing a sulfur atom.

In the ethylene-propylene-diene rubber foamed material of the present invention, the ethylene-propylene-diene rubber has long chain branching.

In the ethylene-propylene-diene rubber foamed material of the present invention, it is preferable that the rubber composition further contains a cross-linking auxiliary and the cross-linking auxiliary contains a polyol.

In the ethylene-propylene-diene rubber foamed material of the present invention, it is preferable that the polyol is a polyethylene glycol.

In the ethylene-propylene-diene rubber foamed material of the present invention, it is preferable that the rubber composition contains an organic peroxide having a one-minute half-life temperature of 150°C or more and the organic peroxide contains a first organic peroxide and a second organic peroxide having a lower one-minute half-life temperature than that of the first organic peroxide.

A sealing material of the present invention includes the above-described ethylene-propylene-diene rubber foamed material and a pressure-sensitive adhesive layer provided on at least one surface of the ethylene-propylene-diene rubber foamed material.

A method for producing an ethylene-propylene-diene rubber foamed material of the present invention includes a kneading step of kneading a rubber composition containing 100 parts by mass of the ethylene-propylene-diene rubber, 0.5 to 20 parts by mass of the organic peroxide, 0.5 to 20 parts by mass of a derivative of p-quinonedioxime, 1 to 30 parts by mass of a foaming agent, and a foaming auxiliary and a foaming step of heating the rubber composition to be foamed.

In the method for producing an ethylene-propylene-diene rubber foamed material of the present invention, it is preferable that a molding step of extruding the rubber composition is included and in the foaming step, the rubber composition extruded in the molding step is cross-linked and foamed.

Effect of the Invention

In the ethylene-propylene-diene rubber foamed material of the present invention, the content ratio of a sulfur atom (a sulfur atom content) calculated based on the measurement result of a fluorescent X-ray measurement, based on mass, is 1000 ppm or less, so that the corrosive properties are reduced and the ethylene-propylene-diene rubber foamed material has a 50 % compressive load value of 0.1 to 2.0 N/cm$^2$, so that the flexibility is excellent.

Thus, when the ethylene-propylene-diene rubber foamed material is used, corrosion of a member is suppressed and the member is capable of being sealed with excellent fittability and excellent followability to irregularities.

The sealing material of the present invention includes the above-described ethylene-propylene-diene rubber foamed material, so that the corrosion of the member is suppressed and the ethylene-propylene-diene rubber foamed material is capable of being surely brought into tight contact with the member and in this way, a gap between the members is capable of being surely filled with the ethylene-propylene-diene rubber foamed material.

According to the method for producing an ethylene-propylene-diene rubber foamed material of the present invention, the corrosion of the member is suppressed and the ethylene-propylene-diene rubber foamed material that is capable of sealing the member with excellent fittability and excellent followability to irregularities is capable of being easily produced with excellent production efficiency.

Brief Description of the Drawings

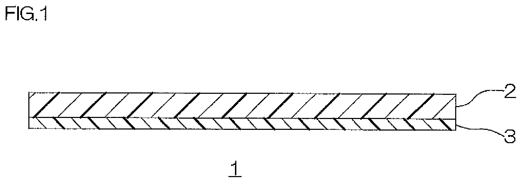

[FIG. 1] FIG. 1 shows a schematic sectional view illustrating one embodiment of a sealing material of the present invention.

Embodiment of the Invention

An ethylene-propylene-diene rubber (hereinafter, may be referred to as an EPDM) foamed material of the present invention is obtained by foaming a rubber composition containing the EPDM.

The EPDM is a rubber obtained by copolymerization of ethylene, propylene, and dienes. The further copolymerization of the dienes, in addition to the ethylene and the propylene, allows introduction of an unsaturated bond and enables cross-linking with a cross-linking agent.

Examples of the dienes include 5-ethylidene-2-norbornene, 1,4-hexadiene, and dicyclopentadiene. These dienes can be used alone or in combination of two or more.

In the present invention, a content of the dienes (a diene content) in the EPDM is, for example, 1 to 20 mass %, preferably 2 to 20 mass %, or more preferably 3 to 15 mass %. When the content of the dienes is less than the above-described range, surface shrinkage may occur in the EPDM foamed material to be obtained. When the content of the dienes is above the above-described range, a crack may occur in the EPDM foamed material.

The EPDM has long chain branching.

A method for introducing a long branched chain into the EPDM is not particularly limited and a known method is used.

The EPDM is produced with a catalyst such as a Ziegler-Natta catalyst or a metallocene catalyst. Preferably, in view of obtaining a long branched chain, a metallocene catalyst is used.

When the EPDM has long chain branching, the elongational viscosity is increased due to the entanglement of the side chain, so that the rubber composition is capable of being excellently foamed and having flexibility.

The rubber composition contains a cross-linking agent and a foaming agent.

The cross-linking agent includes a quinoid compound and an organic peroxide.

The quinoid compound is an organic compound (a quinoid-based cross-linking agent) having a quinoid structure. Examples thereof include p-quinonedioxime, poly-p-dinitrosobenzene, and a derivative thereof. To be specific, an example of the derivative of the p-quinonedioxime includes p,p'-dibenzoylquinonedioxime.

These quinoid compounds can be used alone or in combination of two or more.

As the quinoid compound, preferably, a derivative of p-quinonedioxime is used, or more preferably, p,p"-dibenzoylquinonedioxime is used.

When the derivative of the p-quinonedioxime is used as the quinoid compound, the rubber composition is cross-linked with the derivative of the p-quinonedioxime, so that the sulfur atom content is capable of being reduced and in this way, a reduction in the corrosive properties is achieved and excellent foaming properties are capable of being ensured.

The mixing ratio of the quinoid compound with respect to 100 parts by mass of the EPDM is, for example, 0.05 to 30 parts by mass, or preferably 0.5 to 20 parts by mass. Among all, when the derivative of the p-quinonedioxime is used, the mixing ratio thereof with respect to 100 parts by mass of the EPDM is, for example, 0.05 to 20 parts by mass, or preferably 0.5 to 10 parts by mass.

The organic peroxide is an organic compound (an organic peroxide-based cross-linking agent) having a peroxide structure. A preferable example thereof includes an organic peroxide having a one-minute half-life temperature of 150°C or more.

To be specific, examples thereof include dicumyl peroxide (a one-minute half-life temperature: 175°C), dimethyl di(t-butylperoxy)hexane (a one-minute half-life temperature: 180°C), 1,1-di(t-butylperoxy)cyclohexane (a one-minute half-life temperature: 154°C), and $\alpha,\alpha'$-di(t-butylperoxy)diisopropyl benzene (a one-minute half-life temperature: 175°C).

These organic peroxides can be used alone or in combination of two or more.

Preferably, the organic peroxide is used alone.

Also, the organic peroxides may be used in combination of two. In such a case, preferably, an organic peroxide selected from the description above (hereinafter, a first organic peroxide) and an organic peroxide having a lower one-minute half-life temperature than that of the first organic peroxide (hereinafter, a second organic peroxide) are used in combination.

When the first organic peroxide and the second organic peroxide are used in combination, the rubber composition is capable of being excellently cross-linked, so that excellent flexibility with high foaming is capable of being ensured.

To be specific, an example of the first organic peroxide includes an organic peroxide having a one-minute half-life temperature of, for example, 150 to 200°C, or preferably 160 to 180°C. To be specific, an example of the second organic peroxide includes an organic peroxide having a one-minute half-life temperature of, for example, 150 to 170°C, or preferably 150 to 160°C.

A difference between the one-minute half-life temperature of the first organic peroxide and that of the second organic peroxide is, for example, 5 to 40°C, or preferably 10 to 30°C.

When the first organic peroxide and the second organic peroxide are used in combination, in the mixing ratio thereof, the ratio of the second organic peroxide with respect to 100 parts by mass of the first organic peroxide is, for example, 1 to 100 parts by mass, or preferably 10 to 80 parts by mass.

The mixing ratio of the organic peroxide (in the case of being used in combination, the total amount thereof) with respect to 100 parts by mass of the EPDM is, for example, 0.05 to 20 parts by mass, preferably 0.5 to 15 parts by mass, or more preferably 1 to 10 parts by mass.

As the cross-linking agent, a quinoid compound and an organic peroxide are used in combination.

When the quinoid compound and the organic peroxide are used in combination, the cross-linking on the surface of the EPDM foamed material is capable of being sufficiently ensured, so that the occurrence of tackiness on the surface is capable of being reduced.

When the quinoid compound and the organic peroxide are used in combination, in the mixing ratio thereof, the ratio of the organic peroxide with respect to 100 parts by mass of the quinoid compound is, for example, 1 to 500 parts by mass, or preferably 10 to 200 parts by mass.

Examples of the foaming agent include an organic foaming agent and an inorganic foaming agent.

Examples of the organic foaming agent include an azo foaming agent such as azodicarbonamide (ADCA), barium azodicarboxylate, azobisisobutylonitrile (AIBN), azocyclohexylnitrile, and azodiaminobenzene; an N-Nitroso foaming agent such as N,N'-dinitrosopentamethylenetetramine (DTP), N,N'-dimethyl-N,N'-dinitrosoterephthalamide, and trinitrosotrimethyltriamine; a hydrazide foaming agent such as 4,4'-oxybis(benzenesulfonylhydrazide) (OBSH), paratoluenesulfonylhydrazide, diphenylsulfone-3,3'-disulfonylhydrazide, 2,4-toluenedisulfonylhydrazide, p,p-bis(benzenesulfonylhydrazide)ether, benzene-1,3-disulfonylhydrazide, and allylbis(sulfonylhydrazide); a semicarbazide foaming agent such as p-toluylenesulfonylsemicarbazide and 4,4'-oxybis(benzenesulfonylsemicarbazide); a fluorinated alkane foaming agent such as trichloromonofluoromethane and dichloromonofluoromethane; a triazole-based foaming agent such as 5-morpholyl-1,2,3,4-thiatriazole; and other known organic foaming agents. Also, an example of the organic foaming agent includes thermally expansive microparticles in which a heat-expandable substance is encapsulated in a microcapsule. An example of the thermally expansive microparticles can include a commercially available product such as Microsphere (trade name, manufactured by Matsumoto Yushi-Seiyaku Co., Ltd.).

Examples of the inorganic foaming agent include hydrogencarbonate such as sodium hydrogen carbonate and ammonium hydrogen carbonate; carbonate such as sodium carbonate and ammonium carbonate; nitrite such as sodium nitrite and ammonium nitrite; borohydride salt such as sodium borohydride; azides; and other known inorganic foaming agents. Preferably, an azo foaming agent is used. These foaming agents can be used alone or in combination of two or more.

The mixing ratio of the foaming agent with respect to 100 parts by mass of the EPDM is, for example, 0.1 to 50 parts by mass, or preferably 1 to 30 parts by mass.

Preferably, the rubber composition contains a cross-linking auxiliary and a foaming auxiliary.

A preferable example of the cross-linking auxiliary includes a cross-linking auxiliary that fails to contain a sulfur atom in a molecule. To be specific, examples thereof include a monohydric alcohol such as ethanol, a dihydric alcohol such as ethylene glycol, a trihydric alcohol such as glycerine, and a polyol (polyoxyethylene glycol) such as polyethylene glycol and polypropylene glycol. The polyol has a number average molecular weight of, for example, 200 or more, or preferably 300 or more.

These cross-linking auxiliaries can be used alone or in combination of two or more.

As the cross-linking auxiliary, preferably, a polyol is used.

Among all, when the derivative of the p-quinonedioxime is used as the quinoid compound, preferably, a polyethylene glycol is used.

When the polyethylene glycol is used as the polyol, the rubber composition is capable of being excellently cross-linked, so that excellent foaming properties are capable of being ensured.

The mixing ratio of the cross-linking auxiliary with respect to 100 parts by mass of the EPDM is, for example, 0.01 to 20 parts by mass, preferably 0.02 to 15 parts by mass, or more preferably 0.06 to 10 parts by mass.

Examples of the foaming auxiliary include a urea foaming auxiliary, a salicylic acid foaming auxiliary, a benzoic acid foaming auxiliary, and a metal oxide (for example, a zinc oxide and the like). Preferably, a urea foaming auxiliary and a metal oxide are used. These foaming auxiliaries can be used alone or in combination of two or more.

The mixing ratio of the foaming auxiliary with respect to 100 parts by mass of the EPDM is, for example, 0.5 to 20 parts by mass, or preferably 1 to 10 parts by mass.

The rubber composition can appropriately contain a polymer other than the EPDM, a processing auxiliary, a pigment, a flame retardant, a filler, a softener, an oxidation inhibitor, or the like as required.

Examples of the polymer other than the EPDM include a rubber-based polymer and a non-rubber-based polymer. Examples of the rubber-based polymer include a rubber-based copolymer (for example, α-olefin (such as butene-1)-dicyclopentadiene, ethylidene norbornene, and the like) having a cyclic or acyclic polyene having non-conjugated double bonds as a component, an ethylene-propylene rubber, a silicone rubber, a fluororubber, an acrylic rubber, a polyurethane rubber, a polyamide rubber, a natural rubber, a polyisobutylene rubber, a polyisoprene rubber, a chloroprene rubber, a butyl rubber, a nitrile butyl rubber, a styrene-butadiene rubber, a styrene-butadiene-styrene rubber, a styrene-isoprene-styrene rubber, a styrene-ethylene-butadiene rubber, a styrene-ethylene-butylene-styrene rubber, a styrene-isoprene-propylene-styrene rubber, and a chlorosulfonated polyethylene rubber.

Examples of the non-rubber-based polymer include polyethylene, polypropylene, an acrylic polymer (for example, alkyl poly(meth)acrylate and the like), polyvinyl chloride, an ethylene-vinyl acetate copolymer, polyvinyl acetate, polyamide, polyester, chlorinated polyethylene, a urethane polymer, a styrene polymer, a silicone polymer, and an epoxy resin. Preferably, a non-rubber-based polymer is used, or more preferably, polyethylene is used. These polymers other than the EPDM can be used alone or in combination of two or more.

The mixing ratio of the polymer other than the EPDM with respect to 100 parts by mass of the EPDM is, for example, 100 parts by mass or less, or preferably 50 parts by mass or less, and is usually 1 part by mass or more.

Examples of the processing auxiliary include a stearic acid and esters thereof and a zinc stearate. These processing auxiliaries can be used alone or in combination of two or more.

The mixing ratio of the processing auxiliary with respect to 100 parts by mass of the EPDM is, for example, 0.1 to 20 parts by mass, or preferably 1 to 10 parts by mass.

An example of the pigment includes carbon black. These pigments can be used alone or in combination of two or more. The mixing ratio of the pigment with respect to 100 parts by mass of the EPDM is, for example, 1 to 50 parts by mass, or preferably 2 to 30 parts by mass.

Examples of the flame retardant include calcium hydroxide, magnesium hydroxide, and aluminum hydroxide. These flame retardants can be used alone or in combination of two or more. The mixing ratio of the flame retardant with respect to 100 parts by mass of the EPDM is, for example, 5 to 200 parts by mass, preferably 10 to 150 parts by mass, or more preferably 15 to 100 parts by mass.

Examples of the filler include an inorganic filler such as calcium carbonate, magnesium carbonate, silicic acid and salts thereof, clay, talc, mica powders, bentonite, silica, alumina, aluminum silicate, acetylene black, and aluminum powders; an organic filler such as cork; and other known fillers. These fillers can be used alone or in combination of two or more. The mixing ratio of the filler with respect to 100 parts by mass of the EPDM is, for example, 10 to 300 parts by mass, preferably 30 to 200 parts by mass, or more preferably 50 to 200 parts by mass.

Examples of the softener include petroleum oils (for example, paraffinic process oil (paraffinic oil and the like), naphthenic process oil, drying oils, animal and vegetable oils (for example, linseed oil and the like), aromatic process oil, and the like); asphalts; low molecular weight polymers; organic acid esters (for example, phthalic ester (for example, di-2-ethylhexyl phthalate (DOP) and dibutyl phthalate (DBP)), phosphate ester, higher fatty acid ester, alkyl sulfonate ester, and the like); and a thickener. Preferably, petroleum oils are used, or more preferably, paraffinic process oil is used. These softeners can be used alone or in combination of two or more. The mixing ratio of the softener with respect to 100 parts by mass of the EPDM is, for example, 5 to 100 parts by mass, or preferably 10 to 70 parts by mass.

Examples of the oxidation inhibitor include 2-mercaptobenzimidazole, 2,2,4-trimethyl-1,2-dihydroquinoline, and 4,4'-bis($\alpha,\alpha$'-dimethylbenzyl)diphenylamine. Preferably, 2-mercaptobenzimidazole is used. These oxidation inhibitors can be used alone or in combination of two or more. The mixing ratio of the oxidation inhibitor with respect to 100 parts by mass of the EPDM is, for example, 0.05 to 20 parts by mass, or preferably 0.5 to 15 parts by mass.

Furthermore, the rubber composition can appropriately contain a known additive as long as it does not damage the excellent effect of the EPDM foamed material to be obtained in accordance with its purpose and use. Examples of the known additive include a plasticizer, an antioxidant, a colorant, and a fungicide.

On the other hand, preferably, the rubber composition fails to contain a component containing a sulfur atom, to be specific, a vulcanizing retardant containing a sulfur atom (for example, thiazoles, thioureas, and the like).

When the rubber composition fails to contain a vulcanizing retardant such as thiazoles and thioureas, the sulfur atom content in the EPDM foamed material is capable of being reduced and a reduction in the corrosive properties is capable of being achieved.

Next, a method for producing the EPDM foamed material is described.

In order to produce the EPDM foamed material, first, the above-described components are blended to be kneaded using a kneader, a mixer, a mixing roller, or the like, so that the rubber composition is prepared as a kneaded material (a kneading step).

In the kneading step, the components can be also kneaded, while being appropriately heated. Also, in the kneading step, for example, components other than a cross-linking agent, a cross-linking auxiliary, a foaming agent, and a foaming auxiliary are first kneaded to prepare a first kneaded material. Thereafter, a cross-linking agent, a cross-linking auxiliary, a foaming agent, and a foaming auxiliary are added to the first kneaded material to be kneaded, so that the rubber composition (a second kneaded material) can be obtained. When the first kneaded material is kneaded, a part of the cross-linking auxiliary can be blended therein.

The kneaded rubber composition (the kneaded material) is extruded into a sheet shape or the like using an extruder (a molding step) and the extruded rubber composition is heated to be foamed (a foaming step).

A heat condition is appropriately selected in accordance with a cross-linking starting temperature of the cross-linking agent to be blended, a foaming temperature of the foaming agent to be blended, or the like. The rubber composition is preheated using, for example, an oven with internal air circulation at, for example, 40 to 200°C, or preferably 60 to 160°C for, for example, 1 to 60 minutes, or preferably 5 to 40 minutes. After the preheating, the rubber composition is heated at, for example, 450°C or less, preferably 100 to 350°C, or more preferably 120 to 250°C for, for example, 5 to 80 minutes, or preferably 15 to 50 minutes.

According to the method for producing the EPDM foamed material, corrosion of a member is suppressed and the ethylene-propylene-diene rubber foamed material capable of sealing the member with excellent fittability and excellent followability to irregularities is capable of being easily produced with excellent production efficiency.

The prepared rubber composition is extruded into a sheet shape using an extruder, while being heated (a molding step) and the rubber composition is capable of being continuously cross-linked and foamed (a foaming step).

In this way, the rubber composition is foamed and cross-linked, so that the EPDM foamed material is capable of being obtained.

According to the method for producing the EPDM foamed material, the ethylene-propylene-diene rubber foamed material in a desired shape is capable of being easily and surely produced.

The obtained EPDM foamed material has a thickness of, for example, 0.1 to 50 mm, or preferably 1 to 45 mm.

The obtained EPDM foamed material has an open cell structure (an open cell ratio of 100 %) or a semi-open/semi-closed cell structure (an open cell ratio of above 0 % and less than 100 %, or preferably an open cell ratio of 10 to 98 %).

When the EPDM foamed material has an open cell structure or a semi-open/semi-closed cell structure, the improvement of the flexibility is capable of being achieved and furthermore, the improvement of the filling properties of the EPDM foamed material between the members is capable of being achieved.

The EPDM foamed material has a cell size of, for example, 50 to 1200 $\mu$m, preferably 100 to 1000 $\mu$m, or more preferably 200 to 800 $\mu$m.

By setting the upper limit of the cell size of the EPDM foamed material to, for example, 1200 $\mu$m or less, preferably 1000 $\mu$m or less, or more preferably 800 $\mu$m or less, the sealing properties are capable of being excellent. By setting the lower limit of the cell size of the EPDM foamed material to, for example, 50 $\mu$m or more, preferably 100 $\mu$m or more, or more preferably 200 $\mu$m or more, the flexibility is capable of being excellent.

The EPDM foamed material obtained in this way has a volume expansion ratio (a density ratio before and after foaming) of, for example, two times or more, or preferably five times or more, and of usually 30 times or less.

By setting the volume expansion ratio (the density ratio before and after foaming) of the EPDM foamed material to, for example, two times or more, or preferably five times or more, excellent foaming properties are capable of being ensured and the flexibility is capable of being excellent and furthermore, the EPDM foamed material is allowed to follow the unevenness on the surface to be sealed, so that the sealing properties are capable of being excellent. Also, by setting the volume expansion ratio to usually 30 times or less, the strength of the foamed material is capable of being excellent.

The EPDM foamed material has an apparent density (in conformity with JIS K 6767 (1999)) of, for example, 0.50 g/cm$^3$ or less, or preferably 0.2 g/cm$^3$ or less, and of usually 0.01 g/cm$^3$ or more.

By setting the apparent density of the EPDM foamed material to, for example, 0.50 g/cm$^3$ or less, or preferably 0.2 g/cm$^3$ or less, the flexibility is capable of being excellent and furthermore, the EPDM foamed material is allowed to follow the unevenness on the surface to be sealed, so that the sealing properties are capable of being excellent. Also, by setting the density to usually 0.01 g/cm$^3$ or more, the strength of the foamed material is capable of being excellent.

The EPDM foamed material has a 50 % compressive load value (in conformity with JIS K 6767 (1999)) of, for example, 0.1 to 2.0 N/cm$^2$, preferably 0.15 to 1.5 N/cm$^2$, or more preferably 0.2 to 1.0 N/cm$^2$.

By setting the 50 % compressive load value of the EPDM foamed material to 0.1 N/cm$^2$ or more, preferably 0.15 N/cm$^2$ or more, or more preferably 0.2 N/cm$^2$ or more, a reduction in the sealing properties caused by allowing the foamed material to become extremely soft is capable of being prevented. By setting the 50 % compressive load value to 2.0 N/cm$^2$ or less, preferably 1.5 N/cm$^2$ or less, or more preferably 1.0 N/cm$^2$ or less, the flexibility is capable of being excellent and furthermore, the EPDM foamed material is allowed to follow the unevenness on the surface to be sealed, so that the sealing properties are capable of being excellent.

The content ratio of a sulfur atom (the sulfur atom content) in the EPDM foamed material, based on mass, is 1000 ppm or less, preferably 800 ppm or less, or more preferably 500 ppm or less.

When the content ratio of the sulfur atom in the EPDM foamed material is within the above-described range, a reduction in the corrosive properties is capable of being achieved.

The content ratio of the sulfur atom in the EPDM foamed material is calculated based on the measurement result of a fluorescent X-ray measurement. The detailed conditions in the fluorescent X-ray measurement are described in detail in Examples later.

The sulfur atom content in the EPDM foamed material is capable of being calculated from, for example, the content of the sulfur atom in the material component and is also capable of being obtained by, for example, elemental analysis of the EPDM foamed material.

In the EPDM foamed material, the content ratio of sulfur $S_8$ calculated based on the measurement result of a gel permeation chromatography, based on mass, is, for example, 10 ppm or less, preferably 5 ppm or less, or more preferably 0 ppm.

When the content ratio of the sulfur $S_8$ in the EPDM foamed material is within the above-described range, a reduction in the corrosive properties is capable of being achieved.

A calculation method of the sulfur $S_8$ is described in detail in Examples later.

The EPDM foamed material has a tensile strength (the maximum load in a tensile test in conformity with JIS K 6767 (1999)) of, for example, 1.0 to 50.0 N/cm$^2$, or preferably 2.0 to 30.0 N/cm$^2$.

When the tensile strength of the EPDM foamed material is set within the range of, for example, 1.0 N/cm$^2$ or more, or preferably 2.0 N/cm$^2$ or more, and of, for example, 50. 0 N/cm$^2$ or less, or preferably 30.0 N/cm$^2$ or less, an excellent strength is capable of being obtained, while the flexibility is retained.

The EPDM foamed material has an elongation (in conformity with JIS K 6767 (1999)) of, for example, 10 to 1500 %, or preferably 150 to 1000 %.

When the elongation of the EPDM foamed material is within the range of, for example, 10 % or more, or preferably 150 % or more, and of, for example, 1500 % or less, or preferably 1000 % or less, the strength of the foamed material is capable of being excellent.

The EPDM foamed material has a permanent compression set (a calculation method is in conformity with JIS K 6767 (1999)) obtained by being compressed by 50 % at 23°C for 22 hours to be then released at 23°C after the elapse of 30 minutes of, for example, 40 % or less, or preferably 20 % or less. The EPDM foamed material has a permanent compression set (a calculation method is in conformity with JIS K 6767 (1999)) obtained by being compressed by 50 % at 23°C for 22 hours to be then released at 23°C after the elapse of 24 hours of, for example, 30 % or less, or preferably 10 % or less.

By setting the permanent compression set under the above-described conditions within the above-described range, a sag due to the permanent compression set is capable of being reduced not only at a normal temperature, but also at a high temperature to recover the shape, so that a gap is capable of being embedded by following a clearance on the surface to be sealed and in this way, the sealing properties are capable of being excellent.

The EPDM foamed material has a permanent compression set (a calculation method is in conformity with JIS K 6767 (1999)) obtained by being compressed by 50 % at 80°C for 22 hours to be then released at 23°C after the elapse of 30 minutes of, for example, 45 % or less, or preferably 30 % or less. The EPDM foamed material has a permanent compression set (a calculation method is in conformity with JIS K 6767 (1999)) obtained by being compressed by 50 % at 80°C for 22 hours to be then released at 23°C after the elapse of 24 hours of, for example, 40 % or less, or preferably 30 % or less.

By setting the permanent compression set under the above-described conditions within the above-described range, a sag due to the permanent compression set is capable of being reduced not only at a normal temperature, but also at a high temperature to recover the shape, so that a gap is capable of being embedded by following a clearance on the surface to be sealed and in this way, the sealing properties are capable of being excellent.

The use of the EPDM foamed material is not particularly limited and the EPDM foamed material is capable of being used as, for example, a vibration-proof material, a sound absorbing material, a sound insulation material, a dust-proof material, a heat insulating material, a buffer material, or a water-stop material, which fills a gap between various members for the purpose of, for example, damping, sound absorption, sound insulation, dust-proof, heat insulation, buffering, or water tight.

To be more specific, in the case of the EPDM foamed material having the above-described properties, the content ratio of a sulfur atom (the sulfur atom content) calculated based on the measurement result of a fluorescent X-ray measurement, based on mass, is 1000 ppm or less, so that the corrosive properties are reduced and the EPDM foamed material has a 50 % compressive load value of 0.1 to 2.0 N/cm$^2$, so that the flexibility is excellent. Thus, when the EPDM foamed material is used, corrosion of a member is suppressed and the member is capable of being sealed with excellent fittability and excellent followability to irregularities, so that the EPDM foamed material is capable of being preferably used as a sealing material.

FIG 1 shows a schematic sectional view illustrating one embodiment of a sealing material of the present invention.

The present invention includes a pressure-sensitive adhesive sealing material (a sealing material) including the above-described EPDM foamed material.

In FIG. 1, a pressure-sensitive adhesive sealing material 1 includes a foamed material layer 2 (after foaming) and a pressure-sensitive adhesive layer 3 provided on one surface (a top surface) of the foamed material layer 2.

The foamed material layer 2 is prepared from the above-described EPDM foamed material and has a thickness of, for example, 0.1 to 50 mm, or preferably 1 to 45 mm.

The pressure-sensitive adhesive layer 3 is formed of, for example, a known pressure-sensitive adhesive.

Examples of the pressure-sensitive adhesive include an acrylic pressure-sensitive adhesive, a rubber pressure-sensitive adhesive, a silicone pressure-sensitive adhesive, a polyester pressure-sensitive adhesive, a urethane pressure-sensitive adhesive, a polyamide pressure-sensitive adhesive, an epoxy pressure-sensitive adhesive, a vinyl alkyl ether pressure-sensitive adhesive, and a fluorine pressure-sensitive adhesive. In addition to these, an example of the pressure-sensitive adhesive also includes a hot melt pressure-sensitive adhesive.

These pressure-sensitive adhesives can be used alone or in combination of two or more.

As the pressure-sensitive adhesive, preferably, an acrylic pressure-sensitive adhesive and a rubber pressure-sensitive adhesive are used.

An example of the acrylic pressure-sensitive adhesive includes a pressure-sensitive adhesive mainly composed of an alkyl (meth)acrylate. The acrylic pressure-sensitive adhesive can be obtained by a known method.

The rubber pressure-sensitive adhesive can be obtained from, for example, a natural rubber and/or a synthetic rubber by a known method. To be specific, examples of a rubber include a polyisobutylene rubber, a polyisoprene rubber, a chloroprene rubber, a butyl rubber, and a nitrile butyl rubber.

A form of the pressure-sensitive adhesive is not particularly limited and various forms such as an emulsion-based pressure-sensitive adhesive, a solvent-based pressure-sensitive adhesive, an oligomer-based pressure-sensitive adhesive, or a solid pressure-sensitive adhesive can be used.

The pressure-sensitive adhesive layer 3 has a thickness of, for example, 10 to 10000 $\mu$m, or preferably 50 to 5000 $\mu$m.

A method for forming the pressure-sensitive adhesive sealing material 1 is not particularly limited and a known method can be used. To be specific, for example, first, the EPDM foamed material is produced by the above-described method to obtain the foamed material layer 2. Next, the pressure-sensitive adhesive layer 3 is laminated on the top surface of the foamed material layer 2 by a known method. In this way, the pressure-sensitive adhesive sealing material 1 is capable of being formed.

The foamed material layer 2 is prepared from the above-described EPDM foamed material, so that the pressure-sensitive adhesive sealing material 1 has excellent sealing properties and excellent corrosion resistance to metal, and the pressure-sensitive adhesive sealing material 1 also includes the pressure-sensitive adhesive layer 3, so that the foamed material layer 2 is capable of being attached to an arbitrary place. As a result, according to the pressure-sensitive adhesive sealing material 1, a gap between arbitrary members is capable of being excellently sealed by the foamed material layer 2 prepared from the above-described EPDM foamed material without corroding a metal.

In the above-described description, the pressure-sensitive adhesive layer 3 is formed as a substrateless-type pressure-sensitive adhesive tape or sheet that is formed from the pressure-sensitive adhesive only. Alternatively, for example, though not shown, the pressure-sensitive adhesive layer 3 can be also formed as a substrate-including pressure-sensitive adhesive tape or sheet.

In such a case, the pressure-sensitive adhesive layer 3 is, for example, formed as a laminated pressure-sensitive adhesive tape or sheet in which the pressure-sensitive adhesive is provided on at least one surface of the substrate, which is not shown, or preferably is provided on both surfaces of the substrate (the pressure-sensitive adhesive/the substrate/the pressure-sensitive adhesive).

The substrate (not shown) is not particularly limited and examples thereof include a plastic substrate such as a plastic film or sheet; a paper-based substrate such as paper; a fiber-based substrate such as a fabric, a non-woven fabric, and a net; a metal substrate such as a metal foil and a metal plate; a rubber substrate such as a rubber sheet; a foamed substrate such as a foamed sheet; and furthermore, a laminate thereof.

A method for forming the pressure-sensitive adhesive layer 3 as a substrate-including pressure-sensitive adhesive tape or sheet is not particularly limited and a known method can be used.

In the above-described description, the pressure-sensitive adhesive layer 3 is provided on the top surface only of the foamed material layer 2. Alternatively, for example, though not shown, the pressure-sensitive adhesive layer 3 can be also provided on both surfaces (the top surface and the back surface) of the foamed material layer 2.

According to the pressure-sensitive adhesive sealing material 1, the pressure-sensitive adhesive layer 3 is provided on both surfaces of the foamed material layer 2, so that the pressure-sensitive adhesive sealing material 1 (the foamed material layer 2) is capable of being further surely fixed to a gap between the members by the two pressure-sensitive adhesive layers 3 and in this way, the gap is capable of being further surely sealed.

The pressure-sensitive adhesive sealing material 1 includes the above-descried EPDM foamed material, to be specific, the EPDM foamed material that is capable of suppressing corrosion of the member and sealing the member with excellent fittability and excellent followability to irregularities, so that the corrosion of the member is suppressed and the EPDM foamed material is capable of being surely brought into tight contact with the member and in this way, a gap between the members is capable of being surely sealed.

Examples

While the present invention will be described hereinafter in further detail with reference to Examples and Comparative Examples, the present invention is not limited to these Examples and Comparative Examples.

(1) Production of EPDM Foamed Material

A resin, a cross-linking auxiliary, a processing auxiliary, a pigment, a flame retardant, a filler, and a softener (in Comparative Example 1, further N,N'-dibutylthiourea) were blended at a mixing amount described in the mixing formulation shown in Tables 1 and 2 to be kneaded with a 3L pressurizing kneader, so that a first kneaded material was prepared.

Separately, a cross-linking agent, a vulcanizing retardant (excluding N,N'-dibutylthiourea), an oxidation inhibitor, a foaming agent, and a foaming auxiliary were blended. Thereafter, the obtained mixture was blended into the first kneaded material to be kneaded with a 10-inch mixing roll to obtain a rubber composition (a second kneaded material) (a kneading step).

Next, the rubber composition was extruded into a sheet shape having a thickness of about 8 mm using a single screw extruder (45 mmφ), so that a rubber composition sheet was fabricated (a molding step).

Subsequently, the rubber composition sheet was preheated at 140°C for 20 minutes with an oven with internal air circulation. Thereafter, the temperature of the oven with internal air circulation was increased to 170°C over 10 minutes, so that the rubber composition sheet was heated at 170°C for 10 minutes to be foamed (a foaming step) and in this way, an EPDM foamed material was obtained.

Examples 1 and 3-7 are reference example.

[Table 1]

Table 1

| Ex.No·Comp.Ex.No | | Ex.1 | Ex.2 | Ex.3 | Ex.4 | Ex.5 | Ex.6 | Ex.7 | Comp.Ex.1 | Comp.Ex.2 | CompEx.3 | Comp.Ex.4 | Comp.Ex.5 |
|---|---|---|---|---|---|---|---|---|---|---|---|---|---|
| Resin | EPDM(A) | 100 | - | 100 | 100 | 100 | 100 | 100 | - | 100 | 100 | - | - |
| | EPDM(B) | - | 100 | - | - | - | - | - | - | - | - | - | - |
| | EPDM(C) | - | - | - | - | - | - | - | 100 | - | - | - | 100 |
| | EPDM(D) | - | - | - | - | - | - | - | - | - | - | 100 | - |
| | PE | - | - | - | - | - | - | - | - | - | - | 20 | - |
| Cross-Linking Auxiliary | PEG | - | - | - | 1 | 3 | 3 | 3 | - | 3 | 3 | 3 | 3 |
| Processing Auxiliary | Stearic Acid | 3 | 3 | 3 | 3 | 3 | 3 | 3 | 3 | 3 | 3 | 3 | 3 |
| Pigment | Carbon Black | 10 | 10 | 10 | 10 | 10 | 10 | 10 | 10 | 10 | 10 | 10 | 10 |
| Flame Retardant | Magnesium Hydroxide | 30 | 30 | 30 | 30 | 30 | 30 | 30 | - | - | - | - | - |
| | Aluminium Hydroxyde (H-32) | - | - | - | - | - | - | - | 30 | 30 | 30 | - | - |
| Filler | Calcium Carbonate | 150 | 150 | 150 | 150 | 150 | 150 | 150 | 150 | 150 | 150 | 150 | 200 |
| Softener | Paraffinic Process Oil | 35 | 35 | 35 | 35 | 35 | 35 | 35 | 35 | 35 | 35 | 40 | 35 |
| Cross-linking Agent | Organic Peroxide | $\alpha,\alpha'$di(t-butylperoxy) diisopropyl benzen | 4 | 4 | 4 | 4 | 4 | 5 | 05 | - | 4 | 4 | - | - |
| | | 1.1-di(t-butylperoxy) cyclohexane) | 1 | - | - | - | - | - | - | - | - | - | - | - |
| | | Dicumyl Peroxide | - | - | - | - | - | - | - | - | - | - | 1 | - |
| | Quinoid Compound | p-quinonedioxime | - | - | - | - | - | - | - | - | - | - | 1 | 0.4 |
| | | p,p'-dibenzoylquinonedioxime | 3 | 3 | 3 | 3 | 4 | 5 | 6 | - | - | - | 1 | - |
| | Sulfur | | - | - | - | - | - | - | - | 24 | - | - | - | - |
| | N,N'-m-phenylenedimaleimide | | - | - | - | - | - | - | - | - | 3 | - | - | - |

(continued)

| Ex.No·Comp.Ex.No | | Ex.1 | Ex.2 | Ex.3 | Ex.4 | Ex.5 | Ex.6 | Ex.7 | Comp.Ex.1 | Comp.Ex.2 | CompEx.3 | Comp.Ex.4 | Comp.Ex.5 |
|---|---|---|---|---|---|---|---|---|---|---|---|---|---|
| Vulcanizing Retardant | NN'-dibutylthiourea | - | - | - | - | - | - | - | 1.5 | - | - | 0.5 | 1 |
| | 2-mercaptobenzothiazole | - | - | - | - | - | - | - | 1.2 | - | - | - | - |
| | Zinc Dimethyldithiocarbamate | - | - | - | - | - | - | - | 1 | - | - | - | - |
| | Zinc Diethyldithiocarbamate | - | - | - | - | - | - | - | 1 | - | - | - | - |
| Foaming Agent | ADCA | 20 | 20 | 20 | 20 | 20 | 30 | 20 | 20 | 20 | 20 | 20 | 20 |
| Foaming Auxiliary | Zinc Oxide | 5 | 5 | 5 | 5 | 5 | 5 | 5 | 5 | 5 | 5 | 5 | 5 |
| | Urea Foaming Auxiliary | 5 | 5 | 5 | 5 | 5 | 7.5 | 5 | 2 | 5 | 5 | 5 | 5 |

[Table 2]

Table 2

| Ex. No. | | | Ex.8 | Ex.9 | Ex.10 | Ex.11 |
|---|---|---|---|---|---|---|
| Resin | | EPDM(A) | - | - | - | - |
| | | EPDM(B) | 100 | 100 | 100 | 100 |
| | | EPDM (C) | - | - | - | - |
| | | EPDM(D) | - | - | - | - |
| | | PE | - | - | - | - |
| Cross-Linking Auxiliary | | PEG | 0.8 | 1 | 1 | 1 |
| Processing Auxiliary | | Stearic Acid | 3 | 3 | 3 | 3 |
| Pigment | | Carbon Black | 10 | 10 | 10 | 10 |
| Flame Retardant | | Magnesium Hydroxide | 15 | 15 | 15 | 15 |
| | | Aluminum Hydroxide (H-42) | 15 | 15 | 15 | 15 |
| Filler | | Calcium Carbonate | 150 | 150 | 150 | 150 |
| Softener | | Paraffinic Process Oil | 30 | 30 | 30 | 30 |
| Cross-Linking Agent | Organic Peroxide | $\alpha,\alpha$'-di(t-butylperoxy)diisopropylbenzene | 0.8 | 1 | 1 | 1 |
| | | 1,1-di(t-butylperoxy)cyclohexane | - | - | - | - |
| | | Dicumyl Peroxide | - | - | - | - |
| | Quinoid Compound | p-quinonedioxime | - | - | - | - |
| | | p,p'-dibenzoylquinonedioxime | 2.8 | 3 | 3 | 3 |
| | Sulfur | | - | - | - | - |
| | N,N'-m-phenylenedimaleimide | | - | - | - | - |
| Vulcanizing Retardant | | N,N'-dibutylthiourea | - | - | - | - |
| | | 2-mercaptobenzothiazole | - | - | - | - |
| | | Zinc Dimethyldithiocarbamate | - | - | - | - |
| | | Zinc Diethyldithiocarbamate | - | - | - | - |
| Oxidation Inhibitor | | 2-mercaptobenzimidazole | - | - | 0.5 | 1 |
| Foaming Agent | | ADCA | 20 | 25 | 20 | 20 |
| Foaming Auxiliary | | Zinc Oxide | 5 | 5 | 5 | 5 |
| | | Urea Foaming Auxiliary | 2 | 2.5 | 2 | 2 |

For the abbreviations shown in Tables 1 and 2, the details are given in the following.

EPDM (A): EPT 1045 (manufactured by Mitsui Chemicals, Inc. a diene (dicyclopentadiene) content of 5.0 mass %), using a Ziegler-Natta catalyst
EPDM (B): EPT 8030M (manufactured by Mitsui Chemicals, Inc., containing long chain branching, a diene (5-ethylidene-2-norbornene) content of 9.5 mass %), using a metallocene catalyst
EPDM (C): Eptalloy PX-047 (manufactured by Mitsui Chemicals, Inc., a diene (5-ethylidene-2 -norbornene) content of 4.5 mass %, polyethylene blend type, a polyethylene content of 20 PHR)
EPDM (D): EPT 4045 (manufactured by Mitsui Chemicals, Inc., a diene (5-ethylidene-2-norbornene) content of 8.1 mass %)
PE: Low density polyethylene

PEG: PEG 4000S (polyethylene glycol, a number average molecular weight of 3400)

Zinc Oxide: second-class zinc oxide, manufactured by MITSUI MINING & SMELTING CO., LTD.

Stearic Acid: stearic acid powder "Sakura", manufactured by NOF CORPORATION

Carbon Black: Asahi #50, manufactured by ASAHI CARBON CO., LTD.

Magnesium Hydroxide: KISUMA 5A, manufactured by Kyowa Chemical Industry Co., Ltd.

Aluminum Hydroxide (H-32): HIGILITE H-32, manufactured by SHOWA DENKO K.K.

Aluminum Hydroxide (H-42): HIGILITE H-42, manufactured by SHOWADENKO K.K.

Calcium Carbonate: N heavy calcium carbonate, manufactured by MARUO CALCIUM CO., LTD.

Paraffinic Process Oil: Diana Process Oil PW-380, manufactured by Idemitsu Kosan Co., Ltd.

$\alpha,\alpha'$-di(t-butylperoxy)diisopropyl benzene: PERBUTYL P-40MB, a one-minute half-life temperature: 175°C, manufactured by NOF CORPORATION

1,1-di(t-butylperoxy)cyclohexane: PERHEXA C, a one-minute half-life temperature: 154°C, manufactured by NOF CORPORATION

Dicumyl Peroxide: PERCUMYL D, a one-minute half-life temperature: 175°C, manufactured by NOF CORPORATION

p-quinonedioxime: VULNOC GM, manufactured by OUCHI SHINKO CHEMICAL INDUSTRIAL CO., LTD.

p,p'-dibenzoylquinonedioxime: VULNOC DGM, manufactured by OUCHI SHINKO CHEMICAL INDUSTRIAL CO., LTD.

Sulfur: ALPHAGRAN S-50EN, manufactured by Touchi Co., Ltd.

N,N'-m-phenylenedimaleimide: VULNOC PM, manufactured by OUCHI SHINKO CHEMICAL INDUSTRIAL CO., LTD.

N,N'-dibutylthiourea: NOCCELER BUR, manufactured by OUCHI SHINKO CHEMICAL INDUSTRIAL CO., LTD.

2-Mercaptobenzothiazole: NOCCELER M, manufactured by OUCHI SHINKO CHEMICAL INDUSTRIAL CO., LTD.

Zinc Dimethyldithiocarbamate: NOCCELER PZ, manufactured by OUCHI SHINKO CHEMICAL INDUSTRIAL CO., LTD.

Zinc Diethyldithiocarbamate: NOCCELER EZ, manufactured by OUCHI SHINKO CHEMICAL INDUSTRIAL CO., LTD.

2-mercaptobenzimidazole: NOCRAC MB, manufactured by OUCHI SHINKO CHEMICAL INDUSTRIAL CO., LTD.

ADCA (Azodicarbonamide): AC#LQ, manufactured by EIWA CHEMICAL IND. CO., LTD.

Urea Foaming Auxiliary: CELLPASTE K5, manufactured by EIWA CHEMICAL IND. CO., LTD.

(2) Measurement of Properties

The properties of each of the EPDM foamed materials to be obtained were measured by a method shown in the following. The results are shown in Tables 3 and 4.

A) Apparent Density

The apparent density of each of the EPDM foamed materials was measured in conformity with JIS K 6767 (1999). To be specific, a skin layer of each of the EPDM foamed materials in Examples and Comparative Examples was removed and a test piece having a thickness of about 10 mm was prepared. Thereafter, the weight was measured to calculate the weight per unit volume (the apparent density).

B) 50 % Compressive Load Value

The 50 % compressive load value of each of the EPDM foamed materials was measured in conformity with JIS K 6767 (1999). To be specific, a skin layer of each of the EPDM foamed materials in Examples and Comparative Examples was removed and a test piece having a thickness of about 10 mm was prepared. Thereafter, the test piece was compressed by 50 % at a compression rate of 10 mm/min using a compression testing machine to measure a 50 % compressive load value after 10 seconds of compression.

C) Tensile Strength and Elongation

The tensile strength and the elongation of each of the EPDM foamed materials were measured in conformity with JIS K 6767 (1999). To be specific, a skin layer of each of the EPDM foamed materials in Examples and Comparative Examples was removed and a test piece having a thickness of about 10 mm was prepared. Thereafter, the test piece was stamped out using a dumbbell No. 1 to obtain a sample for measurement. The sample for measurement was pulled with a tensile testing machine at a tension rate of 500 mm/min to measure the load (the tensile strength) and the elongation of the sample for measurement at the time of being cut in a dumbbell shaped parallel portion.

D) 50 % Permanent Compression Set

The 50 % permanent compression set of each of the EPDM foamed materials was measured in conformity with JIS K 6767 (1999). To be specific, the EPDM foamed material was disposed to be fixed in a compressed state of 50 % via a spacer between two pieces of aluminum boards to be then allowed to stand at a normal temperature (23°C) or 80°C for 22 hours. Thereafter, the resulting EPDM foamed material was taken out to be released from the aluminum boards to be then allowed to stand at 23°C for 30 minutes or 24 hours. After the compression and leave-in test, the permanent compression set was obtained by the following formula.

$$\text{Permanent compression set (\%)} = [(\text{initial thickness} - \text{thickness after test}) / \text{initial thickness}] \times 100$$

E) Corrosive Properties of Silver

0.5 g of each of the EPDM foamed materials in Examples and Comparative Examples was put into a 100-mL sealed bottle. Polished and cleansed silver (in a plate shape) was attached to the inner side of a lid of the sealed bottle. The resulting bottle was put into a thermostatic chamber at 85°C for seven days and a presence or absence of corrosion of the silver was checked. When the corrosion was not confirmed, the result was evaluated as "Absence". When the corrosion was confirmed, the result was evaluated as "Presence".

F) Surface Tackiness

The surface of each of the EPDM foamed materials in Examples and Comparative Examples was touched with a finger to check a presence or absence of the tackiness on the surface. When the tackiness was not sensed, the result was evaluated as "Absence". When the tackiness was sensed, the result was evaluated as "Presence".

G) Average Cell Size

An enlarged image of a bubble portion of the foamed material was taken in with a digital microscope (VH-8000, manufactured by KEYENCE CORPORATION) and the image was analyzed using an image analysis software (Win ROOF, manufactured by MITANI CORPORATION), so that an average cell size ($\mu$m) was obtained.

H) Sulfur Atom Content (Theoretical Value)

The content of a sulfur atom in the EPDM foamed material was calculated from the content of the sulfur atom in each of material components used in Examples and Comparative Examples.

I) Sulfur Atom Content (Fluorescent X-Ray Measurement)

Each of the EPDM foamed materials was cut into pieces each having an appropriate size. Four pieces thereof were stacked and were subjected to a fluorescent X-ray measurement (XRF) (measurement size: 30 mm$\phi$). A device and conditions for the XRF are shown in the following.
   XRF device: manufactured by Rigaku Corporation, ZXS100e
   X-ray source: vertical Rh tube
   Analysis area: 30 mm$\phi$
   Analysis range of elements: B to U

In addition, the quantification was calculated from the proportion of elemental sulfur in the total atoms that were detected.

J) Sulfur $S_8$ Content (GPC Measurement)

The content proportion of Sulfur $S_8$ was calculated based on the measurement result of a gel permeation chromatography (GPC). A process, conditions, a device, and the like are shown in the following.

(Process 1)

Each of the EPDM foamed materials was finely cut to fabricate test pieces each having an average value of the maximum length of 5 mm. Next, 300 mg of the EPDM foamed material was weighed and then, 10 ml of THF (tetrahydrofuran) was added thereto using a whole pipette to be allowed to stand overnight.
A THF solution was filtrated with a 0.45 $\mu$m membrane filter and the filtrate was subjected to a gel permeation chromatography measurement.

(Process 2)

Separately, the sulfur $S_8$ was dissolved into the THF to adjust the concentration to 1000 $\mu$g/ml and the THF solution was allowed to stand overnight. Thereafter, the THF solution was filtrated with the 0.45 $\mu$m membrane filter.
The filtrate was diluted at predetermined concentrations to fabricate reference solutions. The reference solutions were subjected to the gel permeation chromatography measurement and the calibration curve was drawn from each of the peak area values to be obtained.

(Process 3)

The mass of the sulfur $S_8$ in the test piece in the Process 1 was obtained by a calibration curve method based on the calibration curve drawn in the Process 2. The obtained value was divided by the mass (300 mg) of the test piece, so that the content proportion of the sulfur $S_8$ in the test piece was calculated.

<Measurement Device and Measurement Conditions>

GPC device: TOSOH HLC-8120 GPC
Column: TSKgel Super HZ2000/HZ2000/HZ1000/HZ1000
Column size: 6.0 mml.D.×150 mm
Elute: THF
Flow rate: 0.6 ml/min
Detector: UV (280 nm)
Column temperature: 40°C
Injection amount: 20 $\mu$l
Detection limit: 10 ppm

[Table 3]

Table 3

| Ex.No.Comp.Ex.No. | Ex.1 | Ex.2 | Ex.3 | Ex.4 | Ex.5 | Ex.6 | Ex.7 | Comp.Ex.1 | Comp.Ex.2 | Comp.Ex.3 | Comp.Ex.4 | Comp.Ex.5 |
|---|---|---|---|---|---|---|---|---|---|---|---|---|
| Apparent Dansity (g/cm$^3$) | 0.093 | 0.113 | 0.165 | 0.103 | 0.109 | 0.090 | 0.133 | 0.081 | | | 0.068 | 0.085 |
| 50%Compressive Load Value (N/cm$^2$) | 026 | 024 | 1.12 | 032 | 0.38 | 0.34 | 0.50 | 029 | | | 2.12 | 6.34 |
| Tensile Strength (N/cm$^2$) | 3.9 | 3.9 | 92 | 6.0 | 7.6 | 5.6 | 7.7 | 6.4 | | | 43 | 7.0 |
| Elongation (%) | 305 | 240 | 250 | 273 | 248 | 185 | 325 | 265 | | | 370 | 265 |
| 50%Permanent Compression Set (at 23°C, 30 min, %) | 8 | 6 | 2 | 5 | 4 | 2 | 16 | 7 | Foaming Failure | | - | - |
| 50 %Permenent Compression Set (at 23°C, 24b, %) | 2 | 2 | 0 | 2 | 2 | 1 | 4 | 1 | | | - | - |
| 50%Permanent Compression Set (at 80°C, 30min, %) | 33 | 45 | 9 | 28 | 30 | 17 | 47 | 49 | | | - | - |
| 50 % Permanent Compression Set (at 80°C, 24h, %) | 27 | 42 | 6 | 19 | 19 | 7 | 40 | 48 | | | 50 | 50 |
| Comosive Properties of Silver | Absence | Absence | Absence | Absence | Absence | Absence | Absence | Presence | - | - | Absence | Absence |
| Surface Tackiness | Absence | Absence | Absence | Absence | Absence | Absence | Absence | Absence | Presence | Presence | Absensce | Absence |
| Average Cell Size (μm) | 451 | 480 | 525 | 461 | 333 | 264 | 317 | 338 | - | - | 610 | 645 |
| SulfurAtom Content [Theoretical Value] (ppm) | 0 | 0 | 0 | 0 | 0 | 0 | 0 | 7332 | 0 | 0 | 237 | 445 |
| Sulfur Atom Content [Fluorescent X-Ray Measurement] (ppm) | 190 | 180 | 180 | 200 | 190 | 190 | 210 | 7500 | - | - | 450 | 650 |

(continued)

| Ex.No.Comp.Ex.No. | Ex.1 | Ex.2 | Ex.3 | Ex.4 | Ex.5 | Ex.6 | Ex.7 | Comp.Ex.1 | Comp.Ex.2 | Comp.Ex.3 | Comp.Ex.4 | Comp.Ex.5 |
|---|---|---|---|---|---|---|---|---|---|---|---|---|
| Sulfure $S_8$ Content [GPC Measurement] (ppm) | <10 | <10 | <10 | <10 | <10 | <10 | <10 | 3000 | - | - | <10 | <10 |

[Table 4]

Table 4

| Ex. No. | Ex. 8 | Ex. 9 | Ex. 10 | Ex. 11 |
|---|---|---|---|---|
| Apparent Density (g/cm$^3$) | 0.096 | 0.089 | 0.101 | 0.114 |
| 50 % Compressive Load Value (N/cm$^2$) | 0.18 | 0.18 | 0.20 | 0.28 |
| Tensile Strength (N/cm$_2$) | 5.9 | 4.3 | 6.0 | 6.3 |
| Elongation (%) | 288 | 295 | 303 | 325 |
| 50 % Permanent Compression Set (at 23°C, 30min, %) | 13 | 12 | 15 | 18 |
| 50 % Permanent Compression Set (at 23°C, 24 h, %) | 5 | 3 | 4 | 6 |
| 50 % Permanent Compression Set (at 80°C, 30 min, %) | 34 | 30 | 36 | 33 |
| 50 % Permanent Compression Set (at 80°C, 24 h, %) | 22 | 20 | 25 | 19 |
| Corrosive Properties of Silver | Absence | Absence | Absence | Absence |
| Surface Tackiness | Absence | Absence | Absence | Absence |
| Average Cell Size ($\mu$m) | 571 | 571 | 601 | 587 |
| SulfurAtom Content (Theoretical Value] (ppm) | 0 | 0 | 300 | 600 |
| Sulfur Atom Content [Fluorescent X-Ray Measurement] (ppm) | 170 | 160 | 500 | 820 |
| Sulfur S$_8$ Content [GPC Measurement] (ppm) | <10 | <10 | <10 | <10 |

While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

Industrial Applicability

The ethylene-propylene-diene rubber foamed material of the present invention is preferably used as a sealing material of various industrial products.

**Claims**

1. An ethylene-propylene-diene rubber foamed material obtained by foaming a rubber composition containing an ethylene-propylene-diene rubber, wherein
the ethylene-propylene-diene rubber foamed material has a 50 % compressive load value of 0.1 to 2.0 N/cm$^2$ measured in conformity with JIS K 6767 (1999),
the content ratio of a sulfur atom calculated based on the measurement result of a fluorescent X-ray measurement using an XRF device manufactured by Rigaku Corporation, ZXS100e having a vertical Rh tube as an X-ray source, an analysis area of 30 mm$\phi$ and an analysis range of elements of B to U, based on mass, is 1000 ppm or less, the rubber composition further contains a quinoid compound and an organic peroxide, and the ethylene-propylene-diene rubber has long chain branching.

2. The ethylene-propylene-diene rubber foamed material according to claim 1, wherein
the content ratio of sulfur S$_8$ calculated based on the measurement result of a gel permeation chromatography as defined in the specification of the present application, based on mass, is 10 ppm or less.

3. The ethylene-propylene-diene rubber foamed material according to claim 1, wherein
the ethylene-propylene-diene rubber foamed material has an apparent density of 0.50 g/cm$^3$ or less calculated in conformity with JIS K 6767 (1999).

**4.** The ethylene-propylene-diene rubber foamed material according to claim 1, wherein the quinoid compound is a derivative of p-quinonedioxime.

**5.** The ethylene-propylene-diene rubber foamed material according to claim 1, wherein the rubber composition fails to contain a vulcanizing retardant containing a sulfur atom.

**6.** The ethylene-propylene-diene rubber foamed material according to claim 1, wherein the rubber composition further contains a cross-linking auxiliary and the cross-linking auxiliary contains a polyol.

**7.** The ethylene-propylene-diene rubber foamed material according to claim 6, wherein the polyol is a polyethylene glycol.

**8.** The ethylene-propylene-diene rubber foamed material according to claim 1, wherein the organic peroxide has a one-minute half-life temperature of 150°C or more and the organic peroxide contains a first organic peroxide and a second organic peroxide having a lower one-minute half-life temperature than that of the first organic peroxide.

**9.** A sealing material comprising:

an ethylene-propylene-diene rubber foamed material and
a pressure-sensitive adhesive layer provided on at least one surface of the ethylene-propylene-diene rubber foamed material, wherein
the ethylene-propylene-diene rubber foamed material is obtained by foaming a rubber composition containing an ethylene-propylene-diene rubber, and
the ethylene-propylene-diene rubber foamed material has a 50 % compressive load value of 0.1 to 2.0 N/cm$^2$ measured in conformity with JIS K 6767 (1999),
the content ratio of a sulfur atom calculated based on the measurement result of a fluorescent X-ray measurement using an XRF device manufactured by Rigaku Corporation, ZXS100e having a vertical Rh tube as an X-ray source, an analysis area of 30 mm$\phi$ and an analysis range of elements of B to U" based on mass, is 1000 ppm or less,
the rubber composition further contains a quinoid compound and an organic peroxide, and
the ethylene-propylene-diene rubber has long chain branching.

**10.** A method for producing an ethylene-propylene-diene rubber foamed material according to claim 1 comprising:

a kneading step of kneading a rubber composition containing
100 parts by mass of the ethylene-propylene-diene rubber,
0.5 to 20 parts by mass of the organic peroxide,
0.5 to 20 parts by mass of a derivative of p-quinonedioxime,
1 to 30 parts by mass of a foaming agent, and
a foaming auxiliary and
a foaming step of heating the rubber composition to be foamed,
wherein the ethylene-propylene-diene rubber has long chain branching.

**11.** The method for producing an ethylene-propylene-diene rubber foamed material according to claim 10, wherein a molding step of extruding the rubber composition is included and in the foaming step, the rubber composition extruded in the molding step is cross-linked and foamed.

## Patentansprüche

**1.** Geschäumtes Ethylen-Propylen-Dien-Kautschukmaterial, erhalten durch Schäumen einer Kautschukzusammensetzung, die einen Ethylen-Propylen-Dien-Kautschuk umfasst, wobei das geschäumte Ethylen-Propylen-Dien-Kautschukmaterial einen 50 %igen Druckbelastungswert von 0,1 bis 2,0 N/cm$^2$, gemessen gemäß JIS K 6767 (1999), aufweist, wobei das Gehaltsverhältnis eines Schwefelatoms basierend auf dem Messergebnis einer Röntgenfluoreszenzmessung unter Verwendung einer von der Rigaku Corporation hergestellten XRF-Vorrichtung berechnet wird, wobei ZXS100e mit einer vertikalen Rh-Röhre als Röntgenquelle, einer Analysefläche von 30 mm φ und einem Analysebereich von Elementen von B bis U, bezogen auf die Masse, 1000 ppm oder weniger beträgt,
die Kautschukzusammensetzung ferner eine chinoide Verbindung und ein organisches Peroxid umfasst und
der Ethylen-Propylen-Dien-Kautschuk eine langkettige Verzweigung aufweist.

2. Geschäumtes Ethylen-Propylen-Dien-Kautschukmaterial nach Anspruch 1, wobei das Gehaltsverhältnis von Schwefel $S_8$, berechnet basierend auf dem Messergebniss einer Gelpermeationschromatographie, wie in der Beschreibung der vorliegenden Anmeldung definiert, bezogen auf die Masse, 10 ppm oder weniger beträgt.

3. Geschäumtes Ethylen-Propylen-Dien-Kautschukmaterial nach Anspruch 1, wobei das geschäumte Ethylen-Propylen-Dien-Kautschukmaterial eine scheinbare Dichte von 0,50 g/cm$^3$ oder weniger, berechnet gemäß JIS K 6767 (1999), aufweist.

4. Geschäumtes Ethylen-Propylen-Dien-Kautschukmaterial nach Anspruch 1, wobei die chinoide Verbindung ein Derivat von p-Chinondioxim ist.

5. Geschäumtes Ethylen-Propylen-Dien-Kautschukmaterial nach Anspruch 1, wobei die Kautschukzusammensetzung kein Vulkanisationsverzögerungsmittel umfasst, das ein Schwefelatom umfasst.

6. Geschäumtes Ethylen-Propylen-Dien-Kautschukmaterial nach Anspruch 1, wobei
die Kautschukzusammensetzung ferner ein Vernetzungshilfsmittel umfasst und
das Vernetzungshilfsmittel ein Polyol umfasst.

7. Geschäumtes Ethylen-Propylen-Dien-Kautschukmaterial nach Anspruch 6, wobei das Polyol ein Polyethylenglykol ist.

8. Geschäumtes Ethylen-Propylen-Dien-Kautschukmaterial nach Anspruch 1, wobei das organische Peroxid eine Halbwertszeit von einer Minute bei 150 °C oder mehr aufweist und
das organische Peroxid ein erstes organisches Peroxid und ein zweites organisches Peroxid mit einer niedrigeren Halbwertzeittemperatur als der des ersten organischen Peroxids umfasst.

9. Dichtungsmaterial umfassend:

ein geschäumtes Ethylen-Propylen-Dien-Kautschukmaterial und
eine druckempfindliche Klebeschicht, die auf mindestens einer Oberfläche des geschäumten Ethylen-Propylen-Dien-Kautschukmaterials vorgesehen ist, wobei
das geschäumte Ethylen-Propylen-Dien-Kautschukmaterial durch Schäumen einer Kautschukzusammensetzung erhalten wird, die einen Ethylen-Propylen-Dien-Kautschuk umfasst, und
das geschäumte Ethylen-Propylen-Dien-Kautschukmaterial einen 50 %igen Druckbelastungswert von 0,1 bis 2,0 N/cm$^2$, gemessen gemäß JIS K 6767 (1999), aufweist,
wobei das Gehaltsverhältnis eines Schwefelatoms basierend auf dem Messergebnis einer Röntgenfluoreszenzmessung unter Verwendung einer von der Rigaku Corporation hergestellten XRF-Vorrichtung berechnet wird,
wobei ZXS100e mit einer vertikalen Rh-Röhre als Röntgenquelle, einer Analysefläche von 30 mm φ und einem Analysebereich von Elementen von B bis U, bezogen auf die Masse, 1000 ppm oder weniger beträgt,
die Kautschukzusammensetzung ferner eine chinoide Verbindung und ein organisches Peroxid umfasst und
der Ethylen-Propylen-Dien-Kautschuk eine langkettige Verzweigung aufweist.

10. Verfahren zur Herstellung eines geschäumten Ethylen-Propylen-Dien-Kautschukmaterials nach Anspruch 1, das Folgendes umfasst:

einen Knetschritt zum Kneten einer Kautschukzusammensetzung, die Folgendes umfasst:

100 Masseteile des Ethylen-Propylen-Dien-Kautschuks,
0,5 bis 20 Massenteile des organischen Peroxids,
0,5 bis 20 Massenteile eines Derivats von p-Chinondioxim,
1 bis 30 Massenteile eines Schäummittels, und

ein schäumendes Hilfsmittel und

EP 2 759 565 B1

einen Schäumungsschritt zum Erwärmen der zu schäumenden Kautschukzusammensetzung,
wobei der Ethylen-Propylen-Dien-Kautschuk eine langkettige Verzweigung aufweist.

**11.** Verfahren zur Herstellung eines geschäumten Ethylen-Propylen-Dien-KautschukMaterials nach Anspruch 10, wobei
ein Formungsschritt zum Extrudieren der Kautschukzusammensetzung enthalten ist und
in dem Schäumungsschritt die in dem Formungsschritt extrudierte Kautschukzusammensetzung vernetzt und geschäumt wird.

## Revendications

**1.** Matériau en caoutchouc mousse d'éthylène-propylène-diène obtenu par moussage d'une composition de caoutchouc contenant un caoutchouc d'éthylène-propylène-diène, dans lequel
le matériau en caoutchouc mousse d'éthylène-propylène-diène présente une valeur de charge compressive de 0,1 à 2,0 N/cm$^2$ mesurée conformément à JIS K 6767 (1999),
le rapport de teneur d'un atome de soufre calculé en fonction du résultat de mesure d'une mesure à rayons X fluorescents à l'aide d'un dispositif XRF fabriqué par Rigaku Corporation, ZXS100e présentant un tube Rh vertical comme source de rayons X, une zone d'analyse de 30 mmφ et une plage d'analyse d'éléments de B à U, en masse, est de 1000 ppm ou moins,
la composition de caoutchouc contient en outre un composé quinoïde et un peroxyde organique, et
le caoutchouc d'éthylène-propylène-diène présente une ramification à longue chaîne.

**2.** Matériau en caoutchouc mousse d'éthylène-propylène-diène selon la revendication 1, dans lequel
le rapport de teneur en soufre S$_8$ calculé en fonction du résultat de mesure d'une chromatographie par perméation sur gel tel que défini dans le mémoire descriptif de la présente demande, en masse, est de 10 ppm ou moins.

**3.** Matériau en caoutchouc mousse d'éthylène-propylène-diène selon la revendication 1, le matériau en caoutchouc mousse d'éthylène-propylène-diène présentant une densité apparente de 0,50 g/cm$^3$ ou moins calculée conformément à JIS K 6767 (1999).

**4.** Matériau en caoutchouc mousse d'éthylène-propylène-diène selon la revendication 1, dans lequel le composé quinoïde est un dérivé de p-quinonedioxime.

**5.** Matériau en caoutchouc mousse d'éthylène-propylène-diène selon la revendication 1, dans lequel la composition de caoutchouc ne contient pas un retardateur de vulcanisation contenant un atome de soufre.

**6.** Matériau en caoutchouc mousse d'éthylène-propylène-diène selon la revendication 1, dans lequel la composition de caoutchouc contient en outre un adjuvant de réticulation et l'adjuvant de réticulation contient un polyol.

**7.** Matériau en caoutchouc mousse d'éthylène-propylène-diène selon la revendication 6, dans lequel le polyol est un polyéthylène glycol.

**8.** Matériau en caoutchouc mousse d'éthylène-propylène-diène selon la revendication 1, dans lequel
le peroxyde organique présente une température de demi-vie d'une minute de 150 °C ou plus et
le peroxyde organique contient un premier peroxyde organique et un deuxième peroxyde organique présentant une température de demi-vie d'une minute moins élevée que celle du premier peroxyde organique.

**9.** Matériau d'étanchéité comprenant :

un matériau en caoutchouc mousse d'éthylène-propylène-diène et
une couche adhésive sensible à la pression disposée sur au moins une surface du matériau en caoutchouc mousse d'éthylène-propylène-diène, dans laquelle
le matériau en caoutchouc mousse d'éthylène-propylène-diène est obtenu par moussage d'une composition de caoutchouc contenant un caoutchouc d'éthylène-propylène-diène, et
le matériau en caoutchouc mousse d'éthylène-propylène-diène présente une valeur de charge compressive de 50 % de 0,1 à 2,0 N/cm$^2$ mesurée conformément à JIS K 6767 (1999),
le rapport de teneur d'un atome de soufre calculé en fonction du résultat de mesure d'une mesure à rayons X fluorescents à l'aide d'un dispositif XRF fabriqué par Rigaku Corporation, ZXS100e comportant un tube Rh vertical comme source de rayons X, une zone d'analyse de 30 mmφ et une plage d'analyse d'éléments de B à U, en masse, est de 1000 ppm ou moins,
la composition de caoutchouc contient en outre un composé quinoïde et un peroxyde organique, et
le caoutchouc d'éthylène-propylène-diène comporte une ramification à chaîne longue.

10. Procédé de production d'un caoutchouc d'éthylène-propylène-diène selon la revendication 1 comprenant :

une étape de malaxage consistant à malaxer une composition de caoutchouc contenant
100 parties en masse du caoutchouc d'éthylène-propylène-diène ;
0,5 à 20 parties en masse du peroxyde organique,
0,5 à 20 parties en masse d'un dérivé de p-quinonedioxime,
1 à 30 parties en masse d'un agent de moussage, et
un auxiliaire de moussage et
une étape de moussage consistant à chauffer la composition de caoutchouc à mousser, le caoutchouc d'éthylène-propylène-diène comportant une ramification à longue chaîne.

11. Procédé de production d'un matériau en caoutchouc mousse d'éthylène-propylène-diène selon la revendication 10, dans lequel
une étape de moulage consistant à extruder la composition de caoutchouc est comprise et
dans l'étape de moussage, la composition de caoutchouc extrudé dans l'étape de moulage est réticulée et en mousse.

FIG.1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1964864 A1
- JP 2000159953 A
- JP 2002179825 A
- EP 2392609 A1
- JP 2010144006 A
- EP 2354170 A
- JP 2008208256 A